# EUROPEAN PATENT SPECIFICATION

(11) **EP 2 229 241 B1**
(45) Date of publication and mention of the grant of the patent: **05.06.2019**
(21) Application number: 08858275.4
(22) Date of filing: 03.12.2008
(51) Int. Cl.: B05D 5/12, B32B 3/00, B32B 15/08

(54) **MULTI-LAYER ANTI-CORROSIVE COATING**
MEHRLAGIGER KORROSIONSSCHUTZÜBERZUG
REVÊTEMENT ANTICORROSIF MULTICOUCHE

(30) Priority: 04.12.2007 US 992143 P
(43) Date of publication of application: 22.09.2010
(73) Proprietor: Oerlikon Metco (US) Inc., Westbury, NY 11590 (US)
(72) Inventor: WEBER, James, Westbury, NY 11590 (US)
(74) Representative: Intellectual Property Services GmbH
(86) International application number: PCT/US2008/085396
(87) International publication number: WO 2009/073716

(56) References cited:
- EP-A1- 0 810 084
- EP-A1- 0 913 252
- EP-A2- 0 291 260
- EP-A2- 1 298 380
- WO-A1-99/32234
- WO-A1-2007/104122
- WO-A1-2008/027649
- WO-A1-2012/151657
- WO-A2-00/68325
- WO-A2-2008/033740
- CN-A- 102 102 493
- DE-A1-102008 026 313
- GB-A- 2 063 103
- JP-A- 2001 205 736
- JP-A- 2005 262 526
- NL-A- 8 204 847
- US-A- 3 952 120
- US-A- 5 352 526
- US-A- 5 462 769
- US-A1- 2005 053 772
- US-A1- 2007 048 533
- US-A1- 2007 048 533
- US-A1- 2009 263 672
- US-A1- 2010 266 781
- US-A1- 2010 266 790
- US-B1- 6 214 203

## Description

### 1. Field of the Invention

The invention relates generally to apparatus and methods relating to the application of coatings, and more particularly to a multilayer anti-corrosive coating for a metallic substrate such as an iron pipe.

### 2. Description of Related Art

Iron-based pipes have been used in transporting water from different sources for many years. Over time, these pipes exhibit corrosion and, depending on their use, may require frequent replacement. Replacing iron-based pipes is costly for the material, the labor, and the down-time to the consumer.

Cathodic protection is one technique used to control corrosion of a metal surface. This is done by making the surface to be protected the cathode of an electrochemical, or galvanic cell. This is most commonly done using alloys of zinc, magnesium and aluminum. These galvanic anodes are designed and selected to have a greater negative electrochemical potential than the metal they are protecting, which is typically steel. As the galvanic anode electrode corrodes, the anode material is consumed until it must be replaced.

Galvanizing, or more specifically hot-dip galvanizing is the process whereby steel is coated with a layer of metallic zinc. Galvanized coatings are extremely durable in most environments because of their barrier properties and cathodic protection. If, or when, the zinc coating is breached or scratched, exposing the steel surface, the zinc coating acts as an anode to form a galvanic cell, thereby protecting the steel from corrosion. This is also known as localized cathodic protection.

Coatings to iron-based pipes have also been developed utilizing epoxy compositions that result in good corrosion resistance. For example, thermoset polymers are widely used to protect steel pipes, concrete reinforcing bars (rebar), pipe connections, valves and the like from corrosion. The most commonly used thermoset polymer for this type of application is fusion bonded epoxy. Fusion bonded epoxy is typically applied to a steel pipe that is preheated to the application temperature where the fusion bonded epoxy transforms to a liquid. The liquid fusion bonded epoxy flows and solidifies on the pipe, pipe joint, and the like. Coating thickness of the fusion bonded epoxy is around 250 to 500 microns. However, the thickness of these coatings vary, are difficult to apply especially at the joints, and different coatings are required depending on the environmental exposure of the iron-based pipes.

EP 0291260 relates to aqueous epoxy resin-containing compositions and to such compositions which are particularly useful for depositing coatings on metallic substrates in order to protect the substrates against corrosion.

With fusion bonded epoxy, any breach in the coating will result in corrosion of the coated material.

### BRIEF SUMMARY OF THE INVENTION

A multilayer coating according to claim 1 that is corrosion resistant has a first coating layer on a substrate; wherein the substrate can be any of iron, iron pipe, steel, copper, nickel, concrete, wood, wood products, fiberglass, ceramic, plastic; a second coating layer deposited on the first coating layer; and a third coating layer deposited on the second coating layer; wherein the first coating layer is substantially a metal, the second coating layer is a mixture of the metal and a polymeric material, and the third coating layer is substantially the polymeric material.

The metal used for the first and second coating layers is at least one of zinc, aluminum, alloy of zinc-aluminum, magnesium, alloy of zinc-magnesium, alloy of aluminum-magnesium, indium, alloy of zinc-indium, alloy of aluminum-indium, alloy of magnesium-indium, gallium, alloy of zinc-gallium, alloy of aluminum-gallium, alloy of magnesium-gallium, alloy if indium-gallium, tellurium, alloy of zinc-tellurian, alloy of aluminum-tellurium, alloy of magnesium-tellurium, alloy of indium-tellurium, and alloy of gallium-tellurium.

In one embodiment, the substrate is iron pipe and the first coating layer comprises a metal that is anodic to the substrate, preferably 99% zinc or aluminum-zinc having a ratio of about 85% aluminum to about 15% zinc.

The polymeric material comprises at least one of polyethylene, polypropylene, polyester, nylon, polytetrafluorethylene (PTFE), ethylene methacrylate acid copolymer (EMAA), a thermoplastic material and a thermoset material. In one embodiment the polymeric material is polyethylene or polypropylene.

The thickness of the multilayer coating varies with the thickness of the various layers. The thickness of the first coating layer is approximately 50 microns to approximately 100 microns; the thickness of the second coating layer is approximately 5 microns to approximately 100 microns; and the thickness of the third coating layer is approximately 50 microns to approximately 150 microns. In one embodiment, the thickness of the first coating layer is approximately 70-80 microns, the thickness of the second coating layer is approximately 20-30 microns, and the thickness of the third coating layer is approximately 95-105 microns.

A method according to claim 5 is provided for applying a multilayer coating and has the steps of first applying a first coating layer on a substrate; a second step of applying a second coating layer on the first coating layer; and a third step of applying a third coating layer on the second coating layer; wherein the first coating layer is substantially a metal, the second coating layer is a mixture of the metal and a polymeric material, and the third coating layer is substantially the polymeric material.

In one embodiment of the multilayer coating, the first coating layer, the second coating layer and the third coating layer are each applied sequentially using thermal spray. Additionally, the second coating layer may be applied as a mixture, or applied as separate materials that mix during the application processes. More specifically, the metal is applied utilizing a first application means, and the polymer material is applied utilizing a second application means, and the materials mix to form the second coating layer at the application site.

The method of providing the multilayer coating may also include the step of heating the substrate to approximately the fusing temperature of the metal when applying the first coating layer.

The method of providing the multilayer coating may also includes the step of heating the substrate to approximately the fusing temperature of the polymeric material when applying the third coating layer.

Other exemplary embodiments and advantages of the present invention may be ascertained by reviewing the present disclosure and the accompanying drawing.

### BRIEF DESCRIPTION OF THE DRAWINGS

The present invention is further described in the detailed description which follows, in reference to the noted drawing by way of a non-limiting example of an exemplary embodiment of the present invention, and wherein:

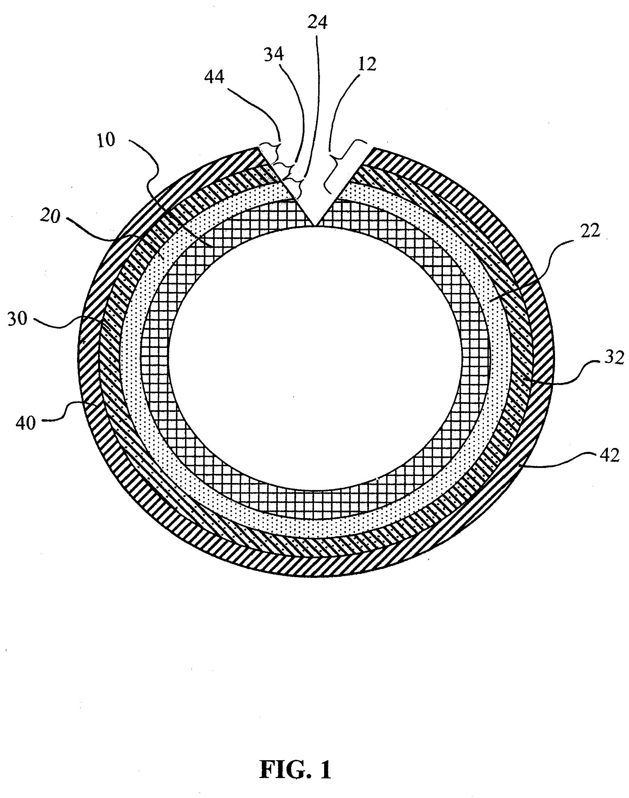

FIG. 1 is a cross section of a pipe with a multilayer coating.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

Figure 1 shows a cross-sectional view of a substrate 10 having a multilayer corrosion resistant coating 12. The substrate 10 may be any of iron, iron pipe, steel, copper, nickel, concrete, wood, wood products, fiberglass, ceramic, plastic, and any other metal or non-metal material that can be used as a substrate. The corrosion resistant coating 12 is made up of three distinct coating layers 20, 30, 40.

The first coating layer 20 is substantially a metal layer that is applied using cold spray or thermal spray techniques. It is understood that thermal spray includes the use of various techniques, including, but not limited to, combustion flame, combustion wire, high velocity oxygen fuel (HVOF), high velocity liquid fuel (HVLF), high velocity air-fuel (HVAF), and plasma.

The metal 22 is at least one of zinc, aluminum, alloy of zinc-aluminum, magnesium, alloy of zinc-magnesium, alloy of aluminum-magnesium, indium, alloy of zinc-indium, alloy of aluminum-indium, alloy of magnesium-indium, gallium, alloy of zinc-gallium, alloy of aluminum-gallium, alloy of magnesium-gallium, alloy if indium-gallium, tellurium, alloy of zinc-tellurian, alloy of aluminum-tellurium, alloy of magnesium-tellurium, alloy of indium-tellurium, and alloy of gallium-tellurium. Other metals may also be considered. In one embodiment, the substrate 10 is iron pipe and the first coating layer 20 is a metal 22 that is anodic to the substrate 10. When this is the configuration, the metal 22 is preferably one of 99% zinc and aluminum-zinc having a ratio of about 85% aluminum to about 15% zinc, and the thickness 24 of the first coating layer is approximately 25 microns to approximately 200 microns. In another embodiment the thickness 24 of the first coating layer is approximately 70-80 microns.

In one embodiment the first coating layer 20 is applied utilizing thermal spray techniques, where the metal 22 is fed as a powder or a wire. The metal 22 is preferably applied at the fusing temperature of the anode, that is, for example, if the substrate 10 is an iron pipe and the metal 22 is zinc, the fusing temperature is approximately 850°F.

The second coating layer 30 is a mixture of the metal 22 and a polymeric material 32. The polymeric material 32 may be applied using thermal spray or cold spray techniques. The polymeric material 32 is at least one of polyethylene, polypropylene, polyester, nylon, polytetrafluorethylene (PTFE), ethylene methacrylate acid copolymer (EMAA), a thermoplastic material and a thermoset material. In one embodiment the polymeric material 32 is at least one of polyethylene and polypropylene. The thickness 34 of the second coating layer 30 is approximately 5 microns to approximately 200 microns. In another embodiment, the thickness 34 of the second coating layer 30 is approximately 20-30 microns.

The second coating layer 30 is preferably applied utilizing thermal spray techniques, where the polymeric material 32 is powder fed through a hopper. The polymeric material 32 is preferably applied at the fusing temperature of the polymeric material 32, that is, for example, at a temperature of approximately 450°F.

In one embodiment, the metal 22 and the polymeric material 32 are applied substantially simultaneously from two or more applicator guns, the mixing occurring at the deposition site.

The third coating layer 40 is made up essentially of the polymeric material 32. The polymeric material 32 may be applied using thermal spray or cold spray techniques. The polymeric material 32 is at least one of polyethylene, polypropylene, polyester, nylon, polytetrafluorethylene (PTFE), ethylene methacrylate acid copolymer (EMAA), a thermoplastic material and a thermoset material. In the preferred embodiment the polymeric material 32 is at least one of polyethylene and polypropylene. The thickness 44 of the third coating layer 40 is approximately 5 microns to approximately 200 microns. In the preferred embodiment, the third thickness 44 of the third coating layer is approximately 95-105 microns.

The third coating layer 40 is preferably applied utilizing thermal spray techniques, where the polymeric material 32 is powder fed through a hopper. The polymeric material 32 is preferably applied at the fusing temperature of the polymeric material 32, that is, for example, at a temperature of approximately 450°F. This is similar to the application of the polymeric material as part of the second layer.

The multi-layer coating 12 is applied to the substrate 10 by first applying the first coating layer 20 onto the substrate 10. This is followed by applying the second coating layer 30 onto the first coating layer. The second coating layer 30 is applied by spraying a mixture of the metal 22 used in the first layer 20 with a polymeric material 32.

It should be noted that the second coating layer 30 can be applied to the first coating layer 20 utilizing a single spray gun or a multiple spray gun method. When a two spray gun method is used, the metal 22 is sprayed from a first spray gun towards the outer surface of the first coating layer 20 while the polymeric material 32 is sprayed from a second spray gun towards the outer surface of the first coating layer 20. Mixing of the coating materials 22, 32 takes place, for example, prior to the coating material reaching the outer surface of the first coating layer 20 by firing the spray guns substantially simultaneously, or upon impact at the outer surface of the first coating layer 20.

In one embodiment, the polymeric coating material 32 is applied first to the outer layer of the first coating layer 20, and the metal coating material 22 embeds into the polymeric material 32 forming the second coating layer 30.

In another embodiment, the multiple spray guns release the coating materials 22, 32 substantially simultaneously to form the second coating layer 30.

It is noted that the foregoing examples have been provided merely for the purpose of explanation and are in no way to be construed as limiting of the present invention. While the present invention has been described with reference to an exemplary embodiment, it is understood that the words which have been used herein are words of description and illustration, rather than words of limitation.

## Claims

1. A multilayer coating comprising:
a first coating layer deposited on a substrate, wherein the substrate comprises at least one of iron, iron pipe, alloys of iron, steel, copper, alloys of copper, nickel, alloys of nickel, concrete, wood, wood products, fiberglass, ceramic and plastic;
a second coating layer deposited on the first coating layer; and
a third coating layer deposited on the second coating layer;
wherein the first coating layer is substantially a metal, the second coating layer is a mixture of the metal and a polymeric material, and the third coating layer is substantially the polymeric material;
wherein the metal comprises at least one of zinc, aluminum, alloy of zinc-aluminum, magnesium, alloy of zinc-magnesium, alloy of aluminum-magnesium, indium, alloy of zinc-indium, alloy of aluminum-indium, alloy of magnesium-indium, gallium, alloy of zinc-gallium, alloy of aluminum-gallium, alloy of magnesium-gallium, alloy if indium-gallium, tellurium, alloy of zinc-tellurian, alloy of aluminum-tellurium, alloy of magnesium-tellurium, alloy of indium-tellurium, and alloy of gallium-tellurium;
wherein when the substrate comprises a metallic material, and wherein the metal is anodic to the substrate;
wherein the polymeric material comprises at least one of polyethylene, polypropylene, nylon, polytetrafluorethylene (PTFE), ethylene methacrylate acid copolymer (EMAA), a thermoplastic material and a thermoset material;
wherein a first thickness of the first coating layer is approximately 50 microns to approximately 100 microns;
wherein a second thickness of the second coating layer is approximately 5 microns to approximately 100 microns;
wherein a third thickness of the third coating layer is approximately 50 microns to approximately 150 microns.

2. A multilayer coating in accordance with claim 1, wherein the zinc is at least 99% zinc or, wherein the aluminum-zinc ratio is about 85% aluminum to about 15% zinc.

3. The multilayer coating of claim 2, wherein the thermoset material is a fusion bonded epoxy.

4. A multilayer coating in accordance with anyone of the previous claims, wherein the multilayer coating forms a corrosion resistant coating.

5. A method of providing a multilayer coating comprising:
applying a first coating layer on a substrate, wherein the substrate comprises at least one of iron, iron pipe, alloys of iron, steel, copper, alloys of copper, nickel, alloys of nickel, concrete, wood, wood products, fiberglass, ceramic and plastic;
applying a second coating layer on the first coating layer; and
applying a third coating layer on the second coating layer;
wherein the first coating layer is substantially a metal, the second coating layer is a mixture of the metal and a polymeric material, and the third coating layer is substantially the polymeric material,
wherein the metal comprises at least one of zinc, aluminum, alloy of zinc-aluminum, magnesium, alloy of zinc-magnesium, alloy of aluminum-magnesium, indium, alloy of zinc-indium, alloy of aluminum-indium, alloy of magnesium-indium, gallium, alloy of zinc-gallium, alloy of aluminum-gallium, alloy of magnesium-gallium, alloy if indium-gallium, tellurium, alloy of zinc-tellurian, alloy of aluminum-tellurium, alloy of magnesium-tellurium, alloy of indium-tellurium, and alloy of gallium-tellurium;
wherein when the substrate comprises a metallic material, and wherein the metal is anodic to the substrate;
wherein the polymeric material comprises at least one of polyethylene, polypropylene, nylon, polytetrafluorethylene (PTFE), ethylene methacrylate acid copolymer (EMAA), a thermoplastic material and a thermoset material;
wherein a first thickness of the first coating layer is approximately 50 microns to approximately 100 microns;
wherein a second thickness of the second coating layer is approximately 5 microns to approximately 100 microns;
herein a third thickness of the third coating layer is approximately 50 microns to approximately 150 microns.

6. A method of providing the multilayer coating in accordance with claim 5, wherein the first coating layer, the second coating layer and the third coating layer are applied sequentially using at least one of cold spray, thermal spray and plasma spray.

7. A method of providing the multilayer coating in accordance with claim 5 or claim 6, further comprising the step of heating the substrate to approximately the fusion temperature of the metal when applying the first coating layer, or further comprising the step of heating the substrate to approximately the fusion temperature of the polymeric material when applying the third coating layer.

## Patentansprüche

1. Eine mehrschichtige Beschichtung, umfassend:
eine erste Beschichtungsschicht, die auf einem Substrat abgeschieden ist,
wobei das Substrat mindestens eines von Eisen, Eisenrohr, Eisenlegierungen, Stahl, Kupfer, Kupferlegierungen, Nickel, Nickellegierungen, Beton, Holz, Holzprodukte, Glasfaser, Keramik und Kunststoff umfasst;
eine zweite Beschichtungsschicht, die auf der ersten Beschichtungsschicht abgeschieden ist; und
eine dritte Beschichtungsschicht, die auf der zweiten Beschichtungsschicht abgeschieden ist;
wobei die erste Beschichtungsschicht im Wesentlichen ein Metall ist, die zweite Beschichtungsschicht eine Mischung aus dem Metall und einem Polymermaterial ist und die dritte Beschichtungsschicht im Wesentlichen das Polymermaterial ist;
wobei das Metall mindestens eines aus Zink, Aluminium, Legierung aus Zink-Aluminium, Magnesium, Legierung aus Zink-Magnesium, Legierung aus Aluminium-Magnesium, Indium, Legierung aus Zink-Indium, Legierung aus Aluminium-Indium, Legierung aus Magnesium-Indium, Gallium, Legierung aus Zink-Gallium, Legierung aus Aluminium-Gallium, Legierung aus Magnesium-Gallium, Legierung aus Indium-Gallium, Tellur, Legierung aus Zink-Tellur, Legierung aus Aluminium-Tellur, Legierung aus Magnesium-Tellur, Legierung aus Indium-Tellur und Legierung aus Gallium-Tellur umfasst;
wobei, wenn das Substrat ein metallisches Material umfasst, und, wobei, das Metall anodisch zu dem Substrat ist;
wobei das Polymermaterial mindestens eines von Polyethylen, Polypropylen, Nylon, Polytetrafluorethylen (PTFE), Ethylen-Methacrylatsäure-Copolymer (EMAA), ein thermoplastisches Material und ein duroplastisches Material umfasst;
wobei eine erste Dicke der ersten Beschichtungsschicht etwa 50 Mikrometer bis etwa 100 Mikrometer beträgt;
wobei eine zweite Dicke der zweiten Beschichtungsschicht etwa 5 Mikrometer bis etwa 100 Mikrometer beträgt;
wobei eine dritte Dicke der dritten Beschichtungsschicht etwa 50 Mikrometer bis etwa 150 Mikrometer beträgt.

2. Eine mehrschichtige Beschichtung nach Anspruch 1, wobei das Zink mindestens zu 99% aus Zink besteht, oder, wobei das Aluminium-Zink-Verhältnis etwa 85% Aluminium zu etwa 15% Zink beträgt.

3. Die mehrschichtige Beschichtung nach Anspruch 2, wobei das duroplastische Material ein schmelzgebundenes Epoxidharz ist.

4. Eine mehrschichtige Beschichtung nach einem der vorangehenden Ansprüche, wobei die mehrschichtige Beschichtung eine korrosionsbeständige Beschichtung bildet.

5. Ein Verfahren zum Bereitstellen einer mehrschichtigen Beschichtung, umfassend:
Aufbringen einer ersten Beschichtungsschicht auf ein Substrat, wobei das Substrat mindestens eines von Eisen, Eisenrohr, Eisenlegierungen, Stahl, Kupfer, Kupferlegierungen, Nickel, Nickellegierungen, Beton, Holz, Holzprodukte, Glasfaser, Keramik und Kunststoff umfasst;
Aufbringen einer zweiten Beschichtungsschicht auf die erste Beschichtungsschicht; und
Aufbringen einer dritten Beschichtungsschicht auf die zweite Beschichtungsschicht;
wobei die erste Beschichtungsschicht im Wesentlichen ein Metall ist, die zweite Beschichtungsschicht eine Mischung aus dem Metall und einem Polymermaterial ist und die dritte Beschichtungsschicht im Wesentlichen das Polymermaterial ist;
wobei das Metall mindestens eines aus Zink, Aluminium, Legierung aus Zink-Aluminium, Magnesium, Legierung aus Zink-Magnesium, Legierung aus Aluminium-Magnesium, Indium, Legierung aus Zink-Indium, Legierung aus Aluminium-Indium, Legierung aus Magnesium-Indium, Gallium, Legierung aus Zink-Gallium, Legierung aus Aluminium-Gallium, Legierung aus Magnesium-Gallium, Legierung aus Indium-Gallium, Tellur, Legierung aus Zink-Tellur, Legierung aus Aluminium-Tellur, Legierung aus Magnesium-Tellur, Legierung aus Indium-Tellur und Legierung aus Gallium-Tellur umfasst;
wobei, wenn das Substrat ein metallisches Material umfasst, und, wobei, das Metall anodisch zu dem Substrat ist;
wobei das Polymermaterial mindestens eines von Polyethylen, Polypropylen, Nylon, Polytetrafluorethylen (PTFE), Ethylen-Methacrylatsäure-Copolymer (EMAA), ein thermoplastisches Material und ein duroplastisches Material umfasst;
wobei eine erste Dicke der ersten Beschichtungsschicht etwa 50 Mikrometer bis etwa 100 Mikrometer beträgt;
wobei eine zweite Dicke der zweiten Beschichtungsschicht etwa 5 Mikrometer bis etwa 100 Mikrometer beträgt;
wobei eine dritte Dicke der dritten Beschichtungsschicht etwa 50 Mikrometer bis etwa 150 Mikrometer beträgt.

6. Ein Verfahren zum Bereitstellen der mehrschichtigen Beschichtung nach Anspruch 5, wobei die erste Beschichtungsschicht, die zweite Beschichtungsschicht und die dritte Beschichtungsschicht nacheinander unter Verwendung mindestens eines von Kaltspritzen, thermisches Spritzen und Plasmaspritzen aufgebracht werden.

7. Ein Verfahren zum Bereitstellen der mehrschichtigen Beschichtung nach Anspruch 5 oder Anspruch 6, des Weiteren umfassend den Schritt des Erwärmens des Substrats auf etwa die Schmelztemperatur des Metalls beim Aufbringen der ersten Beschichtungsschicht, oder ferner umfassend den Schritt des Erwärmens des Substrats auf etwa die Schmelztemperatur des Polymermaterials beim Aufbringen der dritten Beschichtungsschicht.

## Revendications

1. Un revêtement multicouche, comprenant:
une première couche de revêtement, qui est déposée sur un substrat, dans lequel le substrat comprend au moins l'un de fer, tuyau en fer, alliages de fer, acier, cuivre, alliages de cuivre, nickel, alliages de nickel, béton, bois, produits du bois, fibre de verre, céramique et plastique;
une deuxième couche de revêtement, qui est déposée sur la première couche de revêtement; et
une troisième couche de revêtement, qui est déposée sur la deuxième couche de revêtement;
dans lequel la première couche de revêtement est essentiellement un métal, la deuxième couche de revêtement est un mélange dudit métal et d'un matériau polymère, et la troisième couche de revêtement est essentiellement le matériau polymère;
dans lequel le métal comprend au moins l'un de zinc, aluminium, alliage de zinc-aluminium, magnésium, alliage de zinc-magnésium, alliage d'aluminium-magnésium, indium, alliage de zinc-indium, alliage d'aluminium-indium, alliage de magnésium-indium, gallium, alliage de zinc-gallium, alliage d'aluminium-gallium, alliage de magnésium-gallium, alliage d'indium-gallium, tellure, alliage de zinc-tellure, alliage d'aluminium-tellure, alliage de magnésium-tellure, alliage d'indium-tellure et alliage de gallium-tellure;
dans lequel, lorsque le substrat comprend un matériau métallique, et, dans lequel le métal est anodique par rapport au substrat;
dans lequel le matériau polymère comprend au moins l'un de polyéthylène, polypropylène, nylon, polytétrafluoroéthylène (PTFE), copolymère éthylène-méthacrylate acide (EMAA), un matériau thermoplastique et un matériau thermodurcissable;
dans lequel une première épaisseur de la première couche de revêtement est d'environ 50 micromètres à environ 100 micromètres;
dans lequel une deuxième épaisseur de la deuxième couche de revêtement est d'environ 5 micromètres à environ 100 micromètres;
dans lequel une troisième épaisseur de la troisième couche de revêtement est d'environ 50 micromètres à environ 150 micromètres.

2. Un revêtement multicouche selon la revendication 1, dans lequel le zinc est d'au moins 99 % de zinc, ou, dans lequel le rapport aluminium-zinc est d'environ 85 % d'aluminium à environ 15 % de zinc.

3. Le revêtement multicouche selon la revendication 2, dans lequel le matériau thermodurcissable est une résine époxy liée par fusion.

4. Un revêtement multicouche selon l'une des revendications précédentes, dans lequel le revêtement multicouche forme un revêtement résistant à la corrosion.

5. Un procédé pour fournir un revêtement multicouche, comprenant:
appliquer une première couche de revêtement sur un substrat, dans lequel le substrat comprend au moins l'un de fer, tuyau en fer, alliages de fer, acier, cuivre, alliages de cuivre, nickel, alliages de nickel, béton, bois, produits du bois, fibre de verre, céramique et plastique;
appliquer une deuxième couche de revêtement sur la première couche de revêtement; et
appliquer une troisième couche de revêtement sur la deuxième couche de revêtement;
dans lequel la première couche de revêtement est essentiellement un métal, la deuxième couche de revêtement est un mélange dudit métal et d'un matériau polymère, et la troisième couche de revêtement est essentiellement le matériau polymère;
dans lequel le métal comprend au moins l'un de zinc, aluminium, alliage de zinc-aluminium, magnésium, alliage de zinc-magnésium, alliage d'aluminium-magnésium, indium, alliage de zinc-indium, alliage d'aluminium-indium, alliage de magnésium-indium, gallium, alliage de zinc-gallium, alliage d'aluminium-gallium, alliage de magnésium-gallium, alliage d'indium-gallium, tellure, alliage de zinc-tellure, alliage d'aluminium-tellure, alliage de magnésium-tellure, alliage d'indium-tellure et alliage de gallium-tellure;
dans lequel, lorsque le substrat comprend un matériau métallique, et, dans lequel le métal est anodique par rapport au substrat;
dans lequel le matériau polymère comprend au moins l'un de polyéthylène, polypropylène, nylon, polytétrafluoroéthylène (PTFE), copolymère éthylène-méthacrylate acide (EMAA), un matériau thermoplastique et un matériau thermodurcissable;
dans lequel une première épaisseur de la première couche de revêtement est d'environ 50 micromètres à environ 100 micromètres;
dans lequel une deuxième épaisseur de la deuxième couche de revêtement est d'environ 5 micromètres à environ 100 micromètres;
dans lequel une troisième épaisseur de la troisième couche de revêtement est d'environ 50 micromètres à environ 150 micromètres.

6. Un procédé pour fournir le revêtement multicouche selon la revendication 5, dans lequel la première couche de revêtement, la deuxième couche de revêtement et la troisième couche de revêtement sont appliquées successivement utilisant d'au moins l'un de pulvérisation à froid, pulvérisation thermique et pulvérisation au plasma.

7. Un procédé pour fournir le revêtement multicouche selon la revendication 5 ou la revendication 6, comprenant en outre l'étape consistant à chauffer le substrat à environ la température de fusion du métal lors de l'application de la première couche de revêtement, ou comprenant en outre l'étape consistant à chauffer le substrat à environ la température de fusion du matériau polymère lors de l'application de la troisième couche de revêtement.
